# EUROPEAN PATENT APPLICATION

(11) **EP 2 836 048 A2**
(43) Date of publication of application: **11.02.2015**
(21) Application number: 13306140.8
(22) Date of filing: 08.08.2013
(51) Int. Cl.: H04W 76/02, H04W 36/18, H04W 84/04

(54) **Methods and apparatuses for decoupling uplink and downlink in a mobile communications network**

(71) Applicant: ALCATEL LUCENT, 92100 Boulogne-Billancourt (FR)
(72) Inventor: Wong, Shin Horng, Swindon, Wiltshire SN5 7DJ (GB); Puddle, Nicola, Swindon, Wiltshire SN5 7DJ (GB); Brend, Graham, Swindon, Wiltshire SN5 7DJ (GB)
(74) Representative: Leppard, Andrew John

(57) **Abstract**

A base station method comprises: on receipt of an indication that user equipment being served by another base station is identified for soft handover with the base station, monitoring characteristics of an uplink from the user equipment; and, when the characteristics meet specified criteria, transmitting a coupling-decoupling instruction configured to cause the user equipment to utilise uplink and downlink decoupling by establishing uplink with the base station whilst maintaining a downlink with the another base station. In this way, rather than any coupling-decoupling operation occurring based on downlink transmissions, which may be misleading due to the presence of an uplink-downlink imbalance zone in, for example, a HetNet, instead a decision on whether to perform an uplink and downlink decoupling operation is instead decided based on the characteristics of the uplink to the base station.

## Description

### FIELD OF THE INVENTION

The present invention relates to wireless telecommunications network nodes, methods and computer program products.

### BACKGROUND

Wireless telecommunication networks are known. In such networks, mobile communication devices (for example, mobile telephones) are operable to communicate with base stations provided by network providers.

In known wireless telecommunication networks, radio coverage is provided to network connectable devices, such as mobile telephones, or wireless devices such as tablets, within areas known as cells. A base station is located in each cell to provide radio coverage. Typically, network connectable devices in each cell are operable to receive information and data from a base station and to transmit information and data to a base station.

User equipment roam through the wireless communications network. Base stations are typically provided which support areas of radio coverage. A number of such base stations are provided and are distributed geographically in order to provide a wide area of coverage to user equipment.

When user equipment is within an area served by a base station, communications may be established between the user equipment and the base station over associated radio links.

Traditional base stations provide coverage in relatively large geographical areas and those cells are often referred to as macro cells. It is possible to provide a heterogeneous network (HetNet) where smaller-sized cells are provided within macro cells. Such smaller sized cells are sometimes referred to as low-power nodes (LPN), micro cells, pico cells or femto cells. One way to establish a small cell is to provide a small cell base station that provides coverage having a relatively limited range within the coverage area of the macro cell. The transmission power of a small cell base station is relatively low and, hence, each small cell provides a small coverage area compared to that of a macro cell and covers, for example, an office or a home.

Such small cells are typically provided where the communications coverage provided by the macro cell is poor or where a user wishes to use an alternative communications link provided locally, by the small cell base station, to communicate with the core network, and/or to increase capacity within a network.

Deployment of small cells in a wireless communication network can assist a network in relation to handling capacity in high traffic areas, for example, so-called hot spot areas. An ability to offload traffic to a small cell or cells located in a high traffic area of a network may be particularly useful to a network operator.

Although HetNet deployments may offer advantages, unexpected consequences of such deployments may occur. It is desired to address those consequences.

### SUMMARY

According to a first aspect, there is provided a base station method, comprising: on receipt of an indication that user equipment being served by another base station is identified for soft handover with the base station, monitoring characteristics of an uplink from the user equipment; and, when the characteristics meet specified criteria, transmitting a coupling-decoupling instruction configured to cause the user equipment to utilise uplink and downlink decoupling by establishing uplink with the base station whilst maintaining a downlink with the another base station.

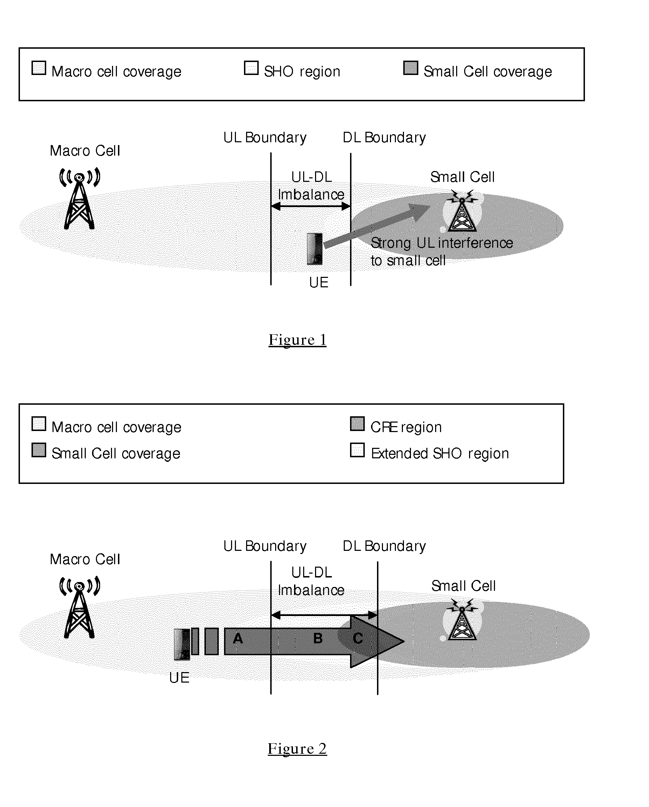

The first aspect recognises that in a HetNet deployment, such as that illustrated in Figure 1, which shows a macro cell and a small cell, the uplink (UL) boundary is where the UE uplink path loss to the macro cell and to the small cell are the same. The downlink (DL) boundary is where the received pilot power from the macro cell and the received pilot power from the small cell are the same at the user equipment. This is different from a homogeneous network (i.e. a macro cell only deployment), where the UL and DL boundaries are at the same points in the network. However, in HetNet deployment, the small cell has a lower transmit power than the macro cell. As a consequence of this, the UL and DL boundaries are different in HetNets as shown in Figure 1. The region between the UL and DL boundaries is referred to as the UL-DL imbalance region.

User equipment in the UL-DL imbalance region that is connected to the macro cell (as shown in Figure 1) will create strong interference to the small cell. This scenario is applicable to both LTE and UMTS radio access technologies. In UMTS, the strong uplink interference will occur if this user equipment is not in the soft handover (SHO) region as shown in Figure 1.

Given the difference in UL and DL boundaries, it has been proposed that the uplink and downlink are decoupled, whereby the uplink and downlink streams are served by different cells. In the example shown Figure 1, the downlink is served by the serving macro cell whilst the uplink is served by the small cell. Hence, instead of generating strong interference to the small cell, the small cell demodulates the UL signal for this user equipment.

UL-DL decoupling is also introduced in LTE machine type communication (MTC) user equipment coverage extension scenarios to limit the amount of uplink coverage extension required from the network by decoupling the user equipment uplink transmission to a small cell that has a more favourable uplink path loss than that of a macro cell.

However, the first aspect also recognises that it is difficult to determine when the user equipment needs to decouple its UL and DL.

Accordingly, a base station method may be provided. The method may comprise the step of monitoring characteristics of an uplink signal or transmission from the user equipment. This monitoring step may occur when an indication is received which identifies that user equipment, which is being served by another base station, has been identified for soft handover with the base station. The method may also comprise the step of transmitting a coupling-decoupling instruction. The coupling-decoupling instruction may be configured to cause the user equipment to decouple uplink and downlink communications by establishing an uplink with the base station whilst also maintaining the downlink with the another base station. This transmission of the coupling-decoupling instruction may occur when the characteristics of the uplink meet specified criteria. In this way, rather than any coupling-decoupling operation occurring based on downlink transmissions, which may be misleading due to the presence of an uplink-downlink imbalance zone in, for example, a HetNet, instead a decision on whether to perform an uplink and downlink decoupling operation is decided based on the characteristics of the uplink to the base station. This helps to ensure that the uplink and downlink decoupling only occurs when the transmission characteristics of the uplink with the base station are suitable to support such a decoupling operation. This helps to ensure that the decoupling operation does not occur too early, nor too late, but occurs instead at an optimal time.

In one embodiment, the characteristics comprise at least one of a strength and a signal to noise ratio of the uplink and the specified criteria comprises a threshold amount. Hence, the assessment of the uplink may be based on a strength or relative strengths of the uplink and/or a signal-to-noise ratio of the uplink.

In one embodiment, the method comprises the step of on receipt of an indication that the base station is to be the user equipment's serving base station, transmitting the coupling-decoupling instruction configured to cause the user equipment to cease utilising uplink and downlink decoupling by establishing both uplink and downlink with the base station. Accordingly, when the base station is configured to be the serving base station for the user equipment, a coupling-decoupling instruction may be transmitted to prevent uplink and downlink decoupling from continuing and instead both the uplink and downlink is established with the same base station.

In one embodiment, the method comprises the step of on receipt of an indication that the base station is to be the user equipment's serving base station and that the base station is not to provide downlink, transmitting the coupling-decoupling instruction configured to cause the user equipment to utilise uplink with the base station and to utilise downlink with the another base station. Accordingly, even if the base station is identified to be the serving base station for the user equipment, the network may instead indicate to the base station that the downlink is to remain with the another base station. This configuration may be particularly useful where the another base station has indicated to the network that it remains lightly loaded.

In one embodiment, the coupling-decoupling instruction comprises at least one of a level 1, a medium access control and a radio resource control message. Accordingly, it can be seen that a variety of different messages may be utilized to provide the coupling-decoupling instruction.

In one embodiment, the coupling-decoupling instruction comprises a cell identifier identifying at least one of a cell providing the downlink and a cell providing the uplink. Accordingly, the identification of whether uplink and downlink decoupling is to occur or not may be decided simply by indicating the cell identifiers or indexes to the cell identifier which identify the cells providing the uplink and the downlink.

In one embodiment, the step of transmitting comprises transmitting the coupling-decoupling instruction to at least one of a radio network controller, a mobility management entity and the another base station to cause the another base station to cause the user equipment to utilise the uplink and downlink decoupling. Accordingly, it can be seen that a variety of different network nodes may be used to relay the instruction to the user equipment.

In one embodiment, the step of transmitting comprises transmitting the coupling-decoupling instruction to the user equipment. Accordingly, the coupling-decoupling instruction may be transmitted directly from the base station to the user equipment.

In one embodiment, the another base station comprises a macro base station and the base station comprises a small cell base station.

According to a second aspect, there is provided a base station, comprising: monitoring logic operable, on receipt of an indication that user equipment being served by another base station is in soft handover with the base station, to monitor characteristics of an uplink from the user equipment; and transmission logic operable, when the characteristics meet specified criteria, to transmit a coupling-decoupling instruction configured to cause the user equipment to utilise uplink and downlink decoupling by establishing uplink with the base station whilst maintaining a downlink with the another base station.

In one embodiment, the characteristics comprise at least one of a strength and a signal to noise ratio of the uplink and the specified criteria comprises a threshold amount.

In one embodiment, the transmission logic is operable, on receipt of an indication that the base station is to be the user equipment's serving base station, to transmit the coupling-decoupling instruction configured to cause the user equipment to cease utilising uplink and downlink decoupling by establishing both uplink and downlink with the base station.

In one embodiment, the transmission logic is operable, on receipt of an indication that the base station is to be the user equipment's serving base station and that the base station is not to provide downlink, to transmit the coupling-decoupling instruction configured to cause the user equipment to utilise uplink with the base station and to utilise downlink with the another base station.

In one embodiment, the coupling-decoupling instruction comprises at least one of a level 1, a medium access control and a radio resource control message.

In one embodiment, the coupling-decoupling instruction comprises a cell identifier identifying at least one of a cell providing the downlink and a cell providing the uplink. Hence, a cell identifier may be provided which identifies the cell providing the downlink and another cell identifier may be provided which identifies the cell providing the uplink.

In one embodiment, the transmission logic is operable to transmit the coupling-decoupling instruction to at least one of a radio network controller, a mobility management entity and the another base station to cause the another base station to cause the user equipment to utilise the uplink and downlink decoupling.

In one embodiment, the transmission logic is operable to transmit the coupling-decoupling instruction to the user equipment.

In one embodiment, the another base station comprises a macro base station and the base station comprises a small cell base station.

According to a third aspect, there is provided a network node method comprising: on receipt of a coupling-decoupling instruction from a base station, identifying user equipment to which the coupling-decoupling instruction relates; and providing the coupling-decoupling instruction to at least one of the user equipment, another base station serving the user equipment and the base station, the coupling-decoupling instruction being configured to cause the user equipment to utilise uplink and downlink decoupling by establishing uplink with the base station whilst maintaining downlink with the another base station.

In one embodiment, the method comprises the step of on receipt of an indication that the user equipment is being served by the base station and that the another base station is under loaded, causing the user equipment to utilise uplink and downlink decoupling by performing uplink with the base station whilst performing downlink with the another base station.

In one embodiment, the step of causing comprises providing the coupling-decoupling instruction to at least one of the user equipment and the base station, the coupling-decoupling instruction being configured to cause the user equipment to utilise uplink and downlink decoupling by performing uplink with the base station whilst performing downlink with the another base station.

In one embodiment, the method comprises the step of on receipt of an indication that the user equipment is being served by the base station and that the another base station is overloaded, causing the user equipment to cease utilising uplink and downlink decoupling by performing uplink and downlink with the base station.

In one embodiment, the step of causing comprises providing the coupling-decoupling instruction to at least one of the user equipment and the base station, the coupling-decoupling instruction being configured to cause the user equipment to cease utilising uplink and downlink decoupling by performing uplink and downlink with the base station.

According to a fourth aspect, there is provided a network node comprising: identification logic operable, on receipt of a coupling-decoupling instruction from a base station, to identify user equipment to which the coupling-decoupling instruction relates; and provision logic operable to provide the coupling-decoupling instruction to at least one of the user equipment, another base station serving the user equipment and the base station, the coupling-decoupling instruction being configured to cause the user equipment to utilise uplink and downlink decoupling by establishing uplink with the base station whilst maintaining downlink with the another base station.

In one embodiment, the provision logic is operable, on receipt of an indication that the user equipment is being served by the base station and that the another base station is under loaded, to cause the user equipment to utilise uplink and downlink decoupling by performing uplink with the base station whilst performing downlink with the another base station.

In one embodiment, the provision logic is operable to provide the coupling-decoupling instruction to at least one of the user equipment and the base station, the coupling-decoupling instruction being configured to cause the user equipment to utilise uplink and downlink decoupling by performing uplink with the base station whilst performing downlink with the another base station.

In one embodiment, the provision logic is operable, on receipt of an indication that the user equipment is being served by the base station and that the another base station is overloaded, to cause the user equipment to cease utilising uplink and downlink decoupling by performing uplink and downlink with the base station.

In one embodiment, the provision logic is operable to provide the coupling-decoupling instruction to at least one of the user equipment and the base station, the coupling-decoupling instruction being configured to cause the user equipment to cease utilising uplink and downlink decoupling by performing uplink and downlink with the base station.

According to a fifth aspect, there is provided a computer program product operable, when executed on a computer, to perform the method steps of the first or third aspect.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

### BRIEF DESCRIPTION OF THE DRAWINGS

Embodiments of the present invention will now be described further, with reference to the accompanying drawings, in which:
Figure 1 illustrates user equipment in an uplink-downlink imbalance region of a HetNet;
Figure 2 illustrates an example operation according to one embodiment; and
Figure 3 illustrates an example operation according to one embodiment.

### DESCRIPTION OF THE EMBODIMENTS

### Overview

Before discussing the embodiments in any more detail, first an overview will be provided. Embodiments recognize that existing techniques for triggering uplink-downlink decoupling can result in the decoupling occurring at the wrong time. Accordingly, embodiments provide a technique where a target base station, which is currently identified to support soft handover with user equipment, monitors the state of the uplink from that user equipment. Once the state of the uplink with the user equipment is sufficient enough to adequately support communication, then the target base station supporting soft handover sends a message to activate uplink-downlink decoupling.

Accordingly, embodiments utilize a message that the network can send across the air interface to the user equipment to activate/ deactivate the uplink-downlink decoupling operation. The message can be implemented in a variety of ways including, for example, a layer 1 order, a medium access control message or a radio resource configuration message, amongst others. This message includes an indication of whether the uplink-downlink decoupling should be activated or deactivated. The message is initiated by the target cell supporting soft handover and may be conveyed to the user equipment in a variety of different ways. For example, the target cell may inform the currently serving base station (typically via network nodes such as, for example, a radio network controller or mobility management entity) when the user equipment uplink signal is acceptable and the macro cell can then send the uplink-downlink decoupling indicator to the user equipment. Alternatively, or additionally, the small cell may send the uplink-downlink decoupling indicator to the user equipment directly.

As mentioned above, this approach recognizes that relying on triggering events such as event 1A (add a new cell to the user equipment's active set) is not sufficient since such triggers are based solely on downlink measurements, which for heterogeneous networks are misleading due to the presence of the uplink-downlink imbalance zone. Hence, the downlink radio condition measured by user equipment does not take into account the uplink radio condition, due to this uplink-downlink imbalance region existing in HetNet deployments. It will be appreciated that the provision of such an uplink-downlink decoupling indication message is not required in homogeneous network deployments because such decoupling of uplink and downlink does not offer benefits in those existing homogeneous networks, nor does the uplink-downlink imbalance region exist in those homogeneous networks.

### Example Operation

Figure 2 illustrates a universal mobile telephone system (UMTS) HetNet network according to one embodiment. Although this embodiment is described with reference to a UMTS network, it will be appreciated that these techniques may also be fully applied to other networks such as, for example, a long-term evolution (LTE) network. A user equipment is moving from the macro cell coverage towards that of the small cell via the uplink-downlink imbalance region, passing through points A, B and C. The user equipment is already configured to perform the following operations. First, to send an "early" event 1A, which is triggered prior to the trigger point for a conventional soft handover region. Sending an "early" event 1A effectively extends the soft handover region to at least point A shown in Figure 2 which is at least at the uplink boundary, but preferably extends into the macro cell side of the uplink boundary. This extended soft handover region is achieved by increasing the bias towards soft handover with the small cell by changing the cell individual offset (CIO) parameters. Although it is possible for a conventional (smaller) soft handover region to be used as shown in Figure 1, the conventional soft handover region would be closer to the downlink boundary and so the user equipment would cause uplink interference in regions between the uplink boundary and the conventional soft handover region which reduces the benefits of providing uplink-downlink decoupling. Second, the small cell is provided with a cell range expansion (CRE) region, where the CIO for the user equipment is set to a value such that the user equipment hands over to the small cell earlier than a conventional handover. This would occur at point C in Figure 2 and is used so that the macro cell can offload more user equipment to the small cell earlier.

Returning now to the movement of the user equipment, at point A, the user equipment triggers the "early" event 1A. The network then adds the small cell to the user equipment active set. The small cell is provided with information relating to the user equipment and can then decode the user equipment's uplink transmissions. As described above, the downlink radio condition does not represent the uplink radio condition and, in this example, the event 1A is performed too early for uplink-downlink decoupling to occur because the small cell is still unable to effectively decode the uplink from the user equipment. However, by causing the soft handover process to occur earlier, both the user equipment and the target small cell are provided with sufficient information to enable them to decode each other's signals. This means that the uplink-downlink decoupling process can occur as soon as it is possible to do so. Hence, at point A, the user equipment uplink signal is poor at the small cell and so it would not be viable to decouple the user equipment's uplink and downlink at this point, such that the small cell would receive the user equipment uplink transmission (for example the Enhanced Dedicated Channel (E-DCH)) in accordance with existing techniques.

The user equipment moves further towards the small cell, passes the uplink boundary and, at point B, the small cell detects that the uplink signal is sufficiently strong at the small cell for the small cell to be able to reliably decode the user equipment's uplink (for example E-DCH) transmissions. Therefore, the small cell initiates the uplink-downlink decoupling process. In this embodiment, the small cell sends an indication to the macro cell (for example via the radio network controller) to trigger the uplink-downlink decoupling process. In this embodiment, the macro cell then sends a High Speed-Shared Control Channel (HS-SCCH) order, which is configured as the uplink-downlink decoupling indication message, to the user equipment to start the uplink-downlink decoupling operation. The user equipment then decouples its uplink and downlink transmissions and uses the small cell as the serving E-DCH cell. Hence, the user equipment will now receive EDCH Hybrid ARQ Indicator Channel (E-HICH) and grants from the small cell, rather than from the macro cell.

It will be appreciated that the transmission of the uplink-downlink decoupling indication message may be performed in a variety of different ways. For example, it is possible for a Medium Access Control (MAC) uplink-downlink decoupling indication message to be sent by the radio network controller (RNC) to the user equipment to activate the uplink-downlink decoupling process. Alternatively, the small cell can inform the RNC that it is able to decode the user equipment uplink signal and the RNC may then send a RRC uplink-downlink decoupling indication message to the user equipment to activate the uplink-downlink decoupling operation. Likewise, the HS-SCCH order to activate the uplink-downlink decoupling may be sent by the small cell directly to the user equipment. It will be appreciated that this would be possible if the small cell downlink signal is sufficiently strong, which can readily be determined based on when the event 1A is triggered.

As the user equipment continues to move toward point C, it would normally handover to the small cell, which is triggered by the user equipment sending event 1D (change of serving cell) to the RNC. At this point, the user equipment is in the CRE region, where it faces strong interference from the macro cell. From an interference point of view, it is preferable for the user equipment to maintain, or to activate uplink-downlink decoupling, where the downlink continues to be controlled by the macro cell, whilst the uplink is received by small cell. However, from a capacity loading point of view, the macro cell may wish to offload this user equipment to the small cell.

Hence, relying on event 1D (which activates when the downlink from the two cells match, subject to any bias) is insufficient since the radio network controller (which handles event one D1) is unaware of the macrocell's loading. Accordingly, having the ability to independently activate and deactivate the uplink-downlink decoupling from when the user equipment is handed over to the small cell is beneficial.

Therefore, at this point, if the macro cell load is high the macro cell (or even the small cell) can send an order to deactivate the uplink-downlink decoupling process. Conversely, if the macro cell load is low, then the macro cell (or even the small cell) can send an order to activate uplink-downlink decoupling, where the downlink control channels come from the macro cell and uplink transmissions are received by the small cell, but the HS-DSCH is served by the macro cell.

When the user equipment moves further into the small cell coverage area (shown in Figure 2) the small cell can then send an order to deactivate the uplink-downlink decoupling. When this happens, the user equipment receives both uplink and downlink from the small cell.

It will be appreciated that when the user equipment moves from the small cell to the macro cell, this process can be reversed. That is, when the user equipment moves to point C, depending upon the macro cell loading, uplink-downlink decoupling can be activated independently from when the user equipment is handed over to the macro cell. When the user equipment moves out of the CRE region, it can be assumed that event 1B to remove the small cell from the user equipment active set is configured such that it will be performed later (in line with extending the soft handover region). This allows the small cell to continue to receive the user equipment's uplink signal. When the user equipment moves to point B, an order (from the macrocell or small cell) is sent to deactivate the uplink-downlink decoupling.

The uplink-downlink decoupling indication message to activate/ deactivate the uplink-downlink decoupling operation may take any suitable form. In one embodiment, the uplink-downlink decoupling indication message consists of the cell ID (or an index to the cell ID) of the cell receiving the uplink signal from the user equipment (for example E-DCH), together with the cell ID (or index to the cell ID) of the cell transmitting the downlink signal to the user equipment (for example HS-DSCH). This allows the cells to be easily identified to enable the user equipment to know whether the uplink-downlink decoupling operation is being performed and which cells to perform transmissions with.

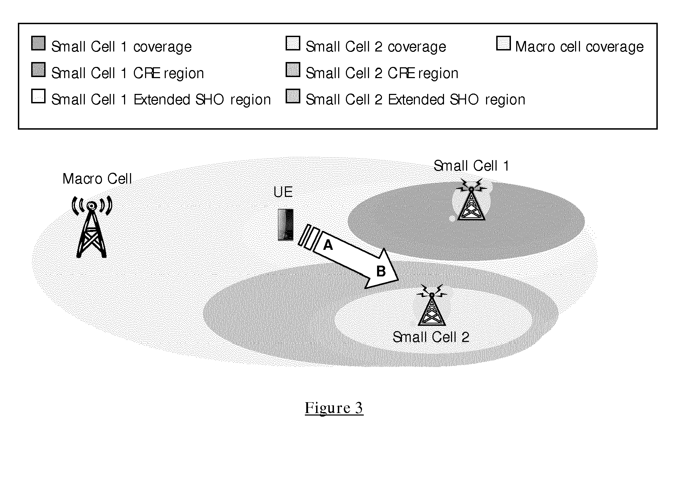

Figure 3 illustrates a UMTS HetNet network according to one embodiment. In this embodiment, the network is able to swap the cell that is supporting one of the user equipment's links (either the uplink or the downlink). The user equipment moves from point A, where its downlink is from the macro cell and the uplink is to small cell 1. The user equipment arrives at point B where the uplink from the user equipment is better served by small cell 2. Hence, an order (for example from the macrocell or from either of the small cells) is sent to the user equipment to swap the uplink from small cell 1 to small cell 2.

Accordingly, it can be seen that methods enable the uplink-downlink decoupling operation in a HetNet to be improved such that they can be based on a user equipment's uplink radio condition instead of just being based on the user equipment's downlink radio condition and the decoupling operation can be controlled by the macro cell base station or the small cell base station, rather than just by the RNC.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

The functions of the various elements shown in the Figures, including any functional blocks labelled as "processors" or "logic", may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" or "logic" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non-volatile storage. Other hardware, conventional and/ or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

## Claims

1. Abase station method, comprising:
on receipt of an indication that user equipment being served by another base station is identified for soft handover with said base station, monitoring characteristics of an uplink from said user equipment; and
when said characteristics meet specified criteria, transmitting a coupling-decoupling instruction configured to cause said user equipment to utilise uplink and downlink decoupling by establishing uplink with said base station whilst maintaining a downlink with said another base station.

2. The method of claim 1, wherein said characteristics comprise at least one of a strength and a signal to noise ratio of said uplink and said specified criteria comprises a threshold amount.

3. The method of claim 1 or 2, comprising the step of on receipt of an indication that said base station is to be said user equipment's serving base station, transmitting said coupling-decoupling instruction configured to cause said user equipment to cease utilising uplink and downlink decoupling by establishing both uplink and downlink with said base station.

4. The method of any preceding claim, comprising the step of on receipt of an indication that said base station is to be said user equipment's serving base station and that said base station is not to provide downlink, transmitting said coupling-decoupling instruction configured to cause said user equipment to utilise uplink with said base station and to utilise downlink with said another base station.

5. The method of any preceding claim, wherein said coupling-decoupling instruction comprises a cell identifier identifying at least one of a cell providing said downlink and a cell providing said uplink.

6. The method of any preceding claim, wherein said step of transmitting comprises transmitting said coupling-decoupling instruction to at least one of a radio network controller, a mobility management entity and said another base station to cause said another base station to cause said user equipment to utilise said uplink and downlink decoupling.

7. The method of any preceding claim, wherein said step of transmitting comprises transmitting said coupling-decoupling instruction to said user equipment.

8. Abase station, comprising:
monitoring logic operable, on receipt of an indication that user equipment being served by another base station in soft handover with said base station, to monitor characteristics of an uplink from said user equipment; and
transmission logic operable, when said characteristics meet specified criteria, to transmit a coupling-decoupling instruction configured to cause said user equipment to utilise uplink and downlink decoupling by establishing uplink with said base station whilst maintaining a downlink with said another base station.

9. A network node method comprising:
on receipt of a coupling-decoupling instruction from a base station, identifying user equipment to which said coupling-decoupling instruction relates; and
providing said coupling-decoupling instruction to at least one of said user equipment, another base station serving said user equipment and said base station, said coupling-decoupling instruction being configured to cause said user equipment to utilise uplink and downlink decoupling by establishing uplink with said base station whilst maintaining downlink with said another base station.

10. The method of claim 9, comprising the step of:
on receipt of an indication that said user equipment is being served by said base station and that said another base station is under loaded, causing said user equipment to utilise uplink and downlink decoupling by performing uplink with said base station whilst performing downlink with said another base station.

11. The method of claim 9 or 10, wherein the step of causing comprises providing said coupling-decoupling instruction to at least one of said user equipment and said base station, said coupling-decoupling instruction being configured to cause said user equipment to utilise uplink and downlink decoupling by performing uplink with said base station whilst performing downlink with said another base station.

12. The method of any one of claims 9 to 11, comprising the step of:
on receipt of an indication that said user equipment is being served by said base station and that said another base station is overloaded, causing said user equipment to cease utilising uplink and downlink decoupling by performing uplink and downlink with said base station.

13. The method of any one of claims 9 to 12, wherein the step of causing comprises providing said coupling-decoupling instruction to at least one of said user equipment and said base station, said coupling-decoupling instruction being configured to cause said user equipment to cease utilising uplink and downlink decoupling by performing uplink and downlink with said base station.

14. A network node comprising:
identification logic operable, on receipt of a coupling-decoupling instruction from a base station, to identify user equipment to which said coupling-decoupling instruction relates; and
provision logic operable to provide said coupling-decoupling instruction to at least one of said user equipment, another base station serving said user equipment and said base station, said coupling-decoupling instruction being configured to cause said user equipment to utilise uplink and downlink decoupling by establishing uplink with said base station whilst maintaining downlink with said another base station.

15. A computer program product operable, when executed on a computer, to perform the method steps of any one of claims 1 to 7 or 9 to 13.
